# EUROPÄISCHE PATENTANMELDUNG

(11) **EP 3 412 494 A1**
(43) Veröffentlichungstag der Anmeldung: **12.12.2018**
(21) Anmeldenummer: 17174563.1
(22) Anmeldetag: 06.06.2017
(51) Int. Cl.: B60L 11/18

(54) **ENTWÄRMUNG EINER FLÜSSIGKEITSGEKÜHLTEN LADEKABEL- UND STECKERKOMBINATION**

(71) Anmelder: Siemens Aktiengesellschaft, 80333 München (DE)
(72) Erfinder: Heid, Günter, 71277 Rutesheim (DE); Pflugfelder, Thomas, 71696 Möglingen (DE)

(57) **Zusammenfassung**

Die Erfindung betrifft eine Ladevorrichtung (1) zum Laden eines mobilen Energiespeichers mit einer flüssigkeitsgekühlten Ladekabel- und Steckerkombination (2) und einem Container (4). Zur Verbesserung der Ladevorrichtung (1) wird vorgeschlagen, dass der Container (4) einen Flüssigkeit-Flüssigkeits-Wärmetauscher (5) aufweist, der einen ersten Kühlkreislauf (11) und einen zweiten Kühlkreislauf (12) thermisch koppelt, wobei der erste Kühlkreislauf (11) mit der flüssigkeitsgekühlte Ladekabel- und Steckerkombination (2) verbunden ist und der zweite Kühlkreislauf (12) sich zumindest abschnittsweise entlang einer Außenseite des Containers (4) erstreckt.

## Beschreibung

Die Erfindung betrifft eine Ladevorrichtung zum Laden eines mobilen Energiespeichers mit einer flüssigkeitsgekühlten Ladekabel- und Steckerkombination und einem Container.

Zum konduktiven Laden von nicht ortsfesten Energiespeichern werden flexible Leitungen, bzw. Kabel und Stecker eingesetzt. Bei dem konduktiven Laden besteht eine elektrische Leitende Verbindung, beispielsweise durch einen Stecker, zwischen Ladestation und Energiespeicher. Im Fall, dass der Kontaktierungsvorgang ungeschützt händisch erfolgen soll, ist die Einhaltung von physikalischen Randbedingungen erforderlich. Das sind insbesondere die Kräfte zum Anheben und Stecken und die Oberflächentemperaturen der Ladekabel- und Steckerkombination (LSK). Wird eine widerstandsbehaftete Leitung (Kabel) von Strom durchflossen, entstehen thermische Verluste linear zur Leitungslänge, welche sich in einer Temperaturerhöhung auswirken. Diese kann durch die Erhöhung des Leiterquerschnittes reduziert werden. Damit steigen jedoch die Masse und das Gewicht der LSK. Bei den aktuell geplanten Ladeströmen werden teilweise die akzeptierbaren Grenzen überschritten, so dass ein forcierter Wärmeabtransport mit einer nicht leitenden Flüssigkeit angewendet wurde. Dies kann beispielsweise mittels eines Wärmeträgeröls geschehen. Die damit transportierte Wärmeenergie kann in die zur Verfügung stehenden Abgabemedien, z.B. Luft, Wasser, Erde abgegeben werden.

Aufgrund der unterschiedlichen Wärmeaufnahmekapazitäten und Wärmeleitwerte sind entsprechende Wärmeübergangsflächen der Wärmetauscher erforderlich. Flüssigkeit-Luft-Wärmetauscher erfordern hierbei eine größere Abmessung als z.B. Flüssigkeit-Flüssigkeits-Wärmetauscher. Die dadurch bedingten großen Abmessungen und Geräusche des Wärmetauschers an der LSK Örtlichkeit sind nicht erwünscht.

Derzeit ist die Installation eines Flüssigkeit-Luft-Wärmetauschers direkt am energieeinspeiseseitigen Anschlusspunkt der LSK üblich. Damit der Wärmetauscher bezüglich seiner Abmessungen nicht auf die zyklisch auftretende Spitzenleistung ausgelegt werden muss, ist ein Wärmespeicher in Form eines Flüssigkeitsbehälters, beispielseise ein Öl, installiert. Alternativ wird das Wärmeträgeröl an einen weiter entfernt gelegenen Flüssigkeits-Luftwärmetauscher gepumpt. Die geht einher mit größeren Mengen von Wärmeträgerflüssigkeiten (Öl), welche sich im Fall einer Leckage ohne zusätzliche Sicherungsmaßnahmen negativ auf die Umwelt auswirken kann.

Der Erfindung liegt die Aufgabe zugrunde, eine Ladevorrichtung zum Laden eines mobilen Energiespeichers zu verbessern.

Diese Aufgabe wird durch eine Ladevorrichtung zum Laden eines mobilen Energiespeichers mit einer flüssigkeitsgekühlten Ladekabel- und Steckerkombination und einem Container gelöst, wobei der Container einen Flüssigkeit-Flüssigkeits-Wärmetauscher aufweist, der einen ersten Kühlkreislauf und einen zweiten Kühlkreislauf thermisch koppelt, wobei der erste Kühlkreislauf mit der flüssigkeitsgekühlte Ladekabel- und Steckerkombination verbunden ist und der zweite Kühlkreislauf sich zumindest abschnittsweise entlang einer Außenseite des Containers erstreckt.

Weitere vorteilhafte Ausgestaltungen der Erfindung sind in den abhängigen Ansprüchen angegeben.

Der Erfindung liegt die Erkenntnis zugrunde, dass die Entwärmung der Ladevorrichtung dadurch verbessern lässt, wenn ein Flüssigkeit-Flüssigkeits-Wärmetauscher zum Einsatz kommt. Dieser ermöglicht, über den zweiten Kühlkreislauf die beim Laden entstehende Wärme an die Umgebung abzugeben. Der Übergang erfolgt über die Außenseite des Containers, entlang der sich der zweite Kühlkreislauf erstreckt. Dies kann ein Bereich des Daches des Containers sein, bei dem der Wärmeübergang an die Umgebungsluft geschieht. Aufgrund der großen verfügbaren Dachfläche kann auch ohne Lüfter, d.h. lüfterlos, eine gute Wärmeabfuhr realisiert werden. Alternativ oder ergänzend kann auch sich auch der zweite Kühlkreislauf über den Boden des Containers erstrecken um die Wärme an das Erdreich abzugeben. Der Übergang der Wärme an das Erdreich kann dadurch noch verbessert werden, dass der Container einen Behälter umfasst, der von der Kühlflüssigkeit des zweiten Kühlkreislaufs durchströmbar ist und in das Erdreich eingebracht werden kann. Dadurch erhöht sich die für den Wärmeübergang an das Erdreich nutzbare Fläche, so dass der Wärmeübergang in das Erdreich verbessert wird. Auch bei der Wärmeabgabe an das Erdreich ist der Wärmeübergang derart gut, dass auf einen Lüfter verzichtet werden kann und der Container lüfterlos ausgeführt ist.

Im Container sind vorzugsweise die elektrischen Komponenten angeordnet, die für den Betrieb der Ladestation erforderlich sind.

Es hat sich als besonders vorteilhaft erwiesen, den Rahmen des Containers für die Durchströmung mit Kühlflüssigkeit des zweiten Kühlkreislaufs vorzusehen. Der Rahmen hat aus konstruktiven Gründen oftmals ein Hohlprofil. Dieser Hohlraum kann dafür genutzt werden, dass dort der zweite Kühlkreislauf zumindest abschnittsweise integriert wird. Mit anderen Worten erstreckt sich der zweite Kühlkreislauf zumindest abschnittsweise durch den Rahmen oder Teile des Rahmens des Containers.

Es hat sich darüber hinaus als voreilhaft erwiesen die Leitungen des zweiten Kühlkreislaufs aus einem Material, insbesondere aus einem Metall oder einer Metalllegierung, zu fertigen, das einen geringen thermischen Widerstand aufweist. Somit ist eine weitere Wärmeabfuhr auch bereits durch die Leitungen des zweiten Kühlkreislaufs möglich.

Zur Reduzierung umweltgefährdenden jedoch elektrisch gut isolierenden Wärmeträgermedien (hier z.B. Öle), ist ein Übergang auf ein für die Umwelt verträgliches Medium vorgesehen. Dieses wird so nahe wie möglich an der LSK vorgenommen, damit umweltgefährdende Medien, bzw. der Aufwand zur Sicherung möglichst minimiert werden. Das umweltverträgliche Wärmeträgermedium kann auf z.B. Glykolbasis hergestellt sein. Vorteil des Flüssigkeit-Flüssigkeits-Wärmetauscher ist sein geringer Raumbedarf und die vernachlässigbare Geräuschentwicklung in der Bedieneinheit an der LSK. Auf eine Kühlung, Erwärmung, Belüftung, Filtereinsatz und Wartung kann verzichtet werden. Zum Wärmeenergieaustausch an die Umgebung, beispielsweise Luft oder Erdboden, soll der Container verwendet werden. Als Übergangsfläche zur Umgebungsluft soll, nicht wie üblich ein Flüssigkeits-Luft-Wärmetauscher eingesetzt werden, sondern die Oberfläche Containers, vorzugsweise der Containerrahmen. Zu diesem Zweck wird das glycolbasierte und korrosionsschützende Wärmeträgermedium innerhalb der Containerrahmenrohre geführt. Vorteilhaft ist die Benutzung der unteren, äußeren Containerrohre.

Zur Umwälzung der Wärmeträgerflüssigkeit kann eine druckgeregelte Heizungstechnikpumpe verwendet werden. Eine selbstständige Druckregelung ist von Vorteil, wenn in den Zuleitungen zum Wärmetauscher an der LSK ein Absperrventil vorgesehen ist. In Abhängigkeit der Verlegeart und der Ausführung der Verrohrung ist eine zusätzliche Wärmeenergieabgabe zur Umgebung zu beobachten. Die Benutzung der Containerrohre zur Nutzung als Wärmetauscher hat Vorteile in der Wartungsfreiheit und des Raumbedarfes, sowie in der Geräuschaussendung.

Zur Dichtigkeitsüberwachung kann ein Prüfsystem zur Anwendung kommen, welches zur Leckageprüfung von im Erdreich liegenden Heizöltanks Anwendung finden. Damit ein Austritt von umweltgefährdenden Ölen vom Kühlkreislauf der LSK verhindert wird, kann das System unter ein leichtes Vakuum gesetzt werden. Das kann mit einer kleinen druckgesteuerten Membranvakuumpumpe realisiert werden. Mit Hilfe eines Vakuumschalters kann die Dichtigkeit des ölbasierten LSK-Systems überwacht werden. Niveauschalter im Ölbehälter und in der Ölauffangwanne der Benutzereinheit erhöhen weiter die Sicherheit.

Ein Vorteil, welcher sich aus den Abmessungen der Containerrohre ergibt, ist das darin befindliche Raumvolumen, welches sich zur Energiezwischenspeicherung der Abwärme verwenden lässt. Das Energiespeichervolumen in Batteriespeicher für Fahrzeuge ist in seiner Ladekapazität begrenzt. Eine Zyklusbetrieb oder Aussetzbetrieb ist deshalb vorausgesetzt. Die verfügbare Wärmekapazität der Wärmeträgerflüssigkeit, der Verrohrung und der in thermischen Kontakt befindlichen Bauteile wird zur Glättung des von der Energieeinbringung abhängigen Temperaturganges verwendet. Als besonders vorteilhaft hat es sich erwiesen, den zweiten Kühlkreislauf zur Aufnahme von mindestens 20 Litern Kühlflüssigkeit vorzusehen, um entsprechende Leistungsspitzen in der Aufladung abzupuffern. Auf eine forcierte, geräuschaussendende Belüftung kann verzichtet werden, im Bedarfsfall jedoch auch um externe Kühler am Container ergänzt werden. Durch den Entfall des Energieüberganges von Flüssigkeit in Luft in der Benutzereinheit, kann diese sehr kompakt, kostengünstig und bauteilarm realisiert werden, was dem Platzbedarf, der Vandalismussicherheit, dem Wartungsaufwand, der Sicherheit und der Zuverlässigkeit entgegen kommt.

Bei einer vorteilhaften Ausgestaltung der Erfindung weist der zweite Kühlkreislauf eine Flüssigkeit auf, die Glycol aufweist. Glycol ist im Gegensatz zu einem Öl umweltverträglich. Bei einer Leckage im Kühlsystem, die zu einem Austritt der Kühlflüssigkeit ins Erdreich führen kann, wird eine Kontaminierung des Erdreichs verhindert, da Glycol vergleichsweise unschädlich ist für die Umwelt und teilweise sogar biologisch abbaubar ist.

Im Folgenden wird die Erfindung anhand des in der Figur dargestellten Ausführungsbeispiels näher beschrieben und erläutert. Dabei zeigt:

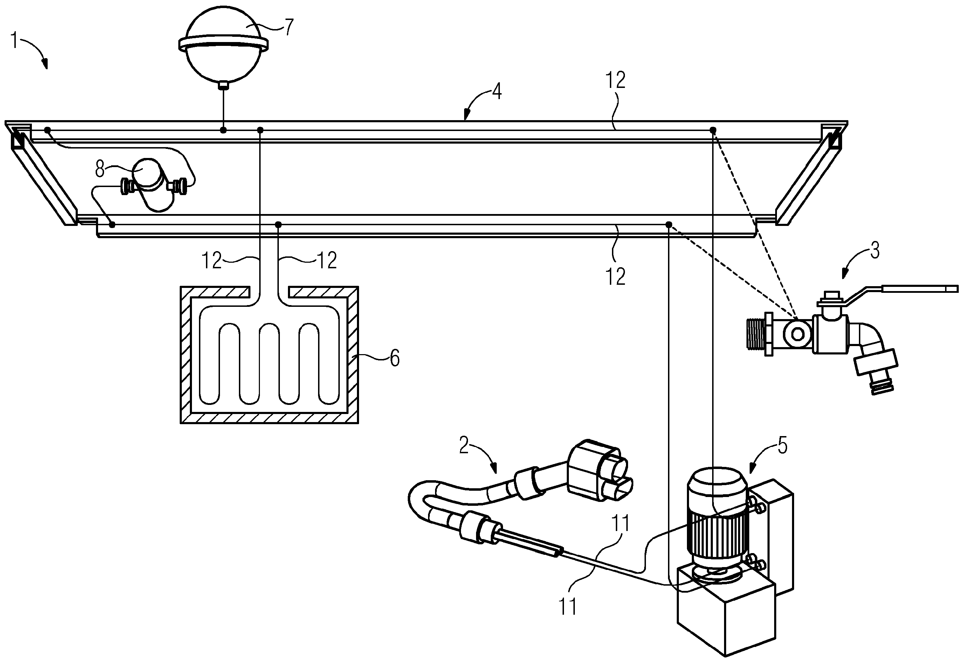

- FIG 1: den schematischen Aufbau der Ladevorrichtung.

Die FIG 1 zeigt eine Ladevorrichtung für einen mobilen Energiespeicher. Der Energiespeicher ist dabei auf einem hier nicht dargestellten Fahrzeug angeordnet. Mittels der flüssigkeitsgekühlten Ladekabel- und Steckerkombination (LSK) 2 wird die Ladevorrichtung 1 mit dem Fahrzeug und dem dort befindlichen Energiespeicher elektrisch verbunden. Durch die flüssigkeitsgekühlten Ladekabel- und Steckerkombination 2 hindurch erstreckt sich ein erster Kühlkreislauf 11, der die Wärme, die durch den Stromfluss zum Energiespeicher im LSK 2 entsteht, aufnehmen kann und zu einem Flüssigkeit-Flüssigkeits-Wärmetauscher 5 transportiert. Dieser überträgt die Wärme an einen zweiten Kühlkreislauf 12, der sich über den Container 4 erstreckt. In dieser Abbildung ist der Übersichtlichkeit halber nur der Rahmen des Containers 4 dargestellt. Am Übergang zum Rahmen hat es sich als vorteilhaft erwiesen, einen Absperrhahn 3 anzuordnen, um den zweiten Kühlkreislauf 12, beispielsweise für Wartungsarbeiten, unterbrechen zu können. Der Rahmen des Containers 4 nimmt in seinem Hohlraum den zweiten Kühlkreislauf 12 auf. Somit wird dann die Wärme über den Rahmen an die Umgebung abgeben. Dies kann beispielsweise beim Dachaufbau des Containers 4 an die Luft geschehen oder im Bodenbereich des Containers 4 an das Erdreich. Zur Verbesserung der Zirkulation des Kühlmediums kann eine Umwälzpumpe 8 in einem der Kühlkreisläufe 11, 12 oder in beide Kühlkreisläufe 11, 12 integriert werden. Ein Ausgleichsgefäß 7 nimmt das bei Temperaturanstieg zusätzliche Kühlmittelvolumen auf. Zur Verbesserung der Wärmeabgabe an das Erdreich kann neben dem Heranführen des Kühlmediums des zweiten Kühlkreislaufs 12 an die Außenseite des Containers 4 auch alternativ oder zusätzlich ein Behälter 6 vorhanden sein, der in das Erdreich eingebracht werden kann. Auch durch diesen erstreckt sich der zweite Kühlkreislauf 12, beispielsweise mäanderförmig, um einen guten Wärmeübergang zum Erdreich zu erzielen. Durch alle diese Maßnahmen, entweder als einzelne Maßnahme oder als Kombination mehrerer Maßnahmen, kann die Wärmeübertragung an die Umgebung so effektiv gestaltet werden, dass auf den Einsatz von Lüftern verzichtet werden kann. Somit ist es möglich, einen lüfterfreien Container 4 für das Laden von mobilen Energiespeichern bereitzustellen.

Zusammenfassend betrifft die Erfindung eine Ladevorrichtung zum Laden eines mobilen Energiespeichers mit einer flüssigkeitsgekühlten Ladekabel- und Steckerkombination und einem Container. Zur Verbesserung der Ladevorrichtung wird vorgeschlagen, dass der Container einen Flüssigkeit-Flüssigkeit Wärmetauscher aufweist, der einen ersten Kühlkreislauf und einen zweiten Kühlkreislauf thermisch koppelt, wobei der erste Kühlkreislauf mit der flüssigkeitsgekühlten Ladekabel- und Steckerkombination verbunden ist und der zweite Kühlkreislauf sich zumindest abschnittsweise entlang einer Außenseite des Containers erstreckt.

## Patentansprüche

1. Ladevorrichtung (1) zum Laden eines mobilen Energiespeichers aufweisend
- eine flüssigkeitsgekühlte Ladekabel- und Steckerkombination (2) und
- einen Container (4),
wobei der Container (4) einen Flüssigkeit-Flüssigkeits-Wärmetauscher (5) aufweist, der einen ersten Kühlkreislauf (11) und einen zweiten Kühlkreislauf (12) thermisch koppelt, wobei der erste Kühlkreislauf (11) mit der flüssigkeitsgekühlten Ladekabel- und Steckerkombination (2) verbunden ist und der zweite Kühlkreislauf (12) sich zumindest abschnittsweise entlang einer Außenseite des Containers (4) erstreckt.

2. Ladevorrichtung nach Anspruch 1, wobei sich der zweite Kühlkreislauf (12) zumindest abschnittsweise entlang des Bodens des Containers (4) erstreckt.

3. Ladevorrichtung nach einem der Ansprüche 1 oder 2, wobei die Ladevorrichtung einen Behälter (6) umfasst, in den sich der zweite Kühlkreislauf erstreckt, wobei der Behälter ins Erdreich einlassbar ist.

4. Ladevorrichtung nach einem der Ansprüche 1 bis 3, wobei der zweite Kühlkreislauf eine Flüssigkeit aufweist, die Glycol aufweist.

5. Ladevorrichtung nach einem der Ansprüche 1 bis 4, wobei der Container (4) lüfterlos ausgeführt ist.
